(19) Europäisches Patentamt
European Patent Office
Office européen des brevets

(11) EP 4 749 670 A1

# (12) EUROPEAN PATENT APPLICATION
published in accordance with Art. 153(4) EPC

(43) Date of publication:
**27.05.2026 Bulletin 2026/22**

(21) Application number: **24872206.8**

(22) Date of filing: **24.09.2024**

(51) International Patent Classification (IPC):
***H01G 9/02*** *(2006.01)* ***H01G 9/00*** *(2006.01)*
***H01G 9/15*** *(2006.01)* ***H01G 9/145*** *(2006.01)*

(52) Cooperative Patent Classification (CPC):
**H01G 9/00; H01G 9/02; H01G 9/145; H01G 9/15**

(86) International application number:
**PCT/JP2024/033993**

(87) International publication number:
**WO 2025/070417 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170433**

(71) Applicant: **Nippon Chemi-Con Corporation**
**Tokyo 141-8605 (JP)**

(72) Inventors:
- **INOUE, Wataru**
  **Tokyo 141-8605 (JP)**
- **MURAKOSHI, Nodoka**
  **Tokyo 141-8605 (JP)**

(74) Representative: **AWA Sweden AB**
**Box 5117**
**200 71 Malmö (SE)**

## (54) SOLID ELECTROLYTIC CAPACITOR AND MANUFACTURING METHOD

(57) A solid electrolytic capacitor that can suppress an increase of the equivalent series resistance and reduction of the capacitance under the high-temperature environment even when the solid electrolytic capacitor uses both the conductive polymer and the electrolytic solution and contains the fibrillated fiber as a separator. The solid electrolytic capacitor includes an anode body having a dielectric film, a cathode body facing the anode body, and an interlayer intervening between the anode body and the cathode body. The interlayer includes a conductive polymer, an electrolytic solution, and a separator. The separator contains the fibrillated fiber and has the air resistance of 5.8 (sec/100mL) or less. The electrical conductivity of the interlayer is 55 (S) or more and less than 180 (S).

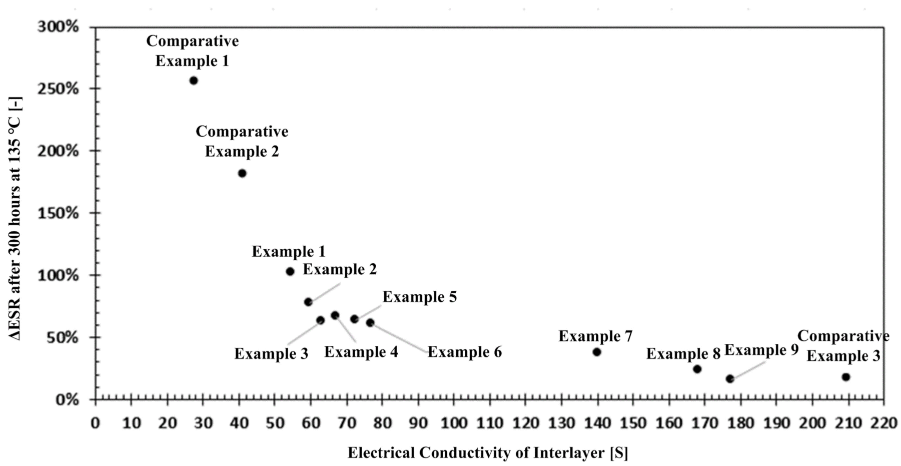


*Fig. 1*

EP 4 749 670 A1

## Description

BACKGROUND

Electrolytic capacitors include valve metal, such as tantalum or aluminum, as an anode foil and a cathode foil. A surface of the anode foil is enlarged by making the valve metal into shapes such as a sintered body or an etching foil, and the enlarged surface has a dielectric film layer thereon. Electrolytes intervene between the anode foil and the cathode foil. The electrolyte closely contacts the uneven surface of the anode foil and acts as a true cathode.

Capacitors are used in various applications. For example, in the field of power electronics, power supply circuits, which convert AC power into DC power by converter circuits and convert said DC power into desired AC power by inverter circuits, are provided with smoothing capacitors to suppress pulsation of DC output from the converter circuits, smooth the suppressed DC, and then input the DC to the inverter circuits. Furthermore, for stable operation and noise removal of semiconductor switching elements such as gallium nitride, decoupling capacitors are provided near said semiconductor switching elements. Also, along with higher power consumption in the field of power electronics, there is a strong demand for capacitors with large capacity.

Furthermore, recent electronic devices and electric devices have larger power consumption such as for rapid charging application and increasing motor drive power in vehicles. If the equivalent series resistance (ESR) of the capacitor is high, the allowable ripple current is limited. Furthermore, if the ESR of the capacitor is high, voltage drops due to the ESR when discharging the capacitor and voltage rises due to the ESR when charging the capacitor. That is, voltage fluctuation occurs in the capacitor. Accordingly, the capacitors with high ESR have low voltage smoothing capability. Therefore, capacitors with lower ESR are demanded.

In this point, the specific surface area of the electrolytic capacitor can be enlarged by enlarging the surface of the anode foil, which is advantageous to achieve the capacitance larger than other types of capacitors such as film capacitors, etc. The electrolytic capacitor includes the electrolyte in a state of electrolytic solution. Large area of the dielectric film of the anode foil contacts the electrolytic solution. Therefore, the capacitance of the electrolytic capacitor can be further increased easily.

In recent years, solid electrolytic capacitors using solid electrolytes which have conductivity higher than the electrolytic solution are getting popular (refer to Patent Document 1). The solid electrolytic capacitors have a small size and large capacity, use solid electrolytes with conductivity higher than the electrolytic solution, and can achieve low equivalent series resistance (ESR). Manganese dioxide and 7,7,8,8-tetracyanoquinodimethane (TCNQ) complexes are known as a solid electrolyte.

In recent years, conductive polymers derived from monomers having $\pi$-conjugated double bonds, such as poly(3,4-ethylenedioxythiophene) (PEDOT) with slow reaction speed and excellent adhesion to the dielectric film, are rapidly becoming popular as a solid electrolyte. In the conductive polymers, acid compounds such as polyanions are used as a dopant, and the conductive polymers have a partial structure acting as a dopant in monomer molecules, exhibiting high conductivity.

In addition to low equivalent series resistance, the solid electrolytic capacitors are also advantageous in that there is no risk for dry-up due to evaporation and volatilization of the electrolytic solution outside over time, exhibiting long lifetime. However, in order to give the defect repairing action of the dielectric film and reduce the leakage current of the solid electrolytic capacitors, so-called hybrid-type solid electrolytic capacitors using the conductive polymer and the electrolytic solution together are getting popular (for example, refer to Patent Document 2).

In recent years, further advancement in integration of electric components and electronic components has led to a demand for solid electrolytic capacitors with a small size. Accordingly, solid electrolytic capacitors with a small size and high capacitance are demanded. Therefore, employment of separators containing fibrillated fibers has been proposed (for example, refer to Patent Documents 3 and 4).

The fibrillated fiber is a fiber in which fine fibers branch out from the surface of the original fiber and is formed by beating, for example. The fibrillated fibers intertwine with each other using fibrillated fine fibers, improving the strength of the separator. Accordingly, the separators can be thinner. The thin separators can make the anode foil and the cathode foil in the solid electrolytic capacitors longer, contributing to the increase in the capacitance of the solid electrolytic capacitors. Therefore, it is expected that the fibrillated fiber can further increase the capacitance of the solid electrolytic capacitors from the viewpoint of thinning the separator.

PRIOR ART DOCUMENT

PATENT DOCUMENT

Patent Document 1: JP2011-60980A
Patent Document 2: JP2015-228424A
Patent Document 3: JP2010-245150A
Patent Document 4: JP2013-26536A

## SUMMARY OF INVENTION

## PROBLEMS TO BE SOLVED BY INVENTION

However, Patent Document 4 points out that when the separator containing the fibrillated fiber is used, the air resistance exceeds 2.0 (sec/100mL) in the measurement utilizing a cylinder with the diameter of 6 mm as a gasket, inhibiting uniform diffusion of the conductive polymer, reducing the capacitance of the solid electrolytic capacitor, and increasing the ESR of the solid electrolytic capacitor. In particular, Patent Document 4 discloses the ESR value of 45.1 mΩ even at the initial stage before the high-temperature load test.

Also, it is observed that when the separator containing the fibrillated fiber is employed in the solid electrolytic capacitor using both the solid electrolyte and the electrolytic solution and this solid electrolytic capacitor is used under the high-temperature environment, the ESR of the solid electrolytic capacitor is greatly increased.

The present disclosure has been proposed to address the above problems, and an objective is to provide a solid electrolytic capacitor that can suppress an increase of the equivalent series resistance and reduction of the capacitance under the high-temperature environment even when the solid electrolytic capacitor uses both the conductive polymer and the electrolytic solution and contains the fibrillated fiber as a separator, and a manufacturing method thereof.

## MEANS TO SOLVE THE PROBLEM

To address the above problems, a solid electrolytic capacitor of the present embodiment includes: an anode body having a dielectric film; a cathode body facing the anode body; and an interlayer intervening between the anode body and the cathode body and containing a conductive polymer, an electrolytic solution, and a separator, in which the separator contains a fibrillated fiber and has an air resistance of 5.8 (sec/100mL) or less, and an electrical conductivity of the interlayer is 55 (s) or more and less than 180 (S).

Here, the air resistance is also called a Gurley value and is a time required for 100 mL of air to pass through the separator. The air resistance is measured by the Gurley method in accordance with JIS P8117:2009. A gasket with the inner diameter of 28.6 mm is used for the measurement. However, for the separator with the air resistance of 1 (s/100mL) or less, a gasket with the inner diameter of 6 mm is used for the measurement, and the result value is converted into a value measured with the inner diameter of 28.6 mm. In detail, it uses the conversion formula in which the value obtained with the inner diameter of 6 mm is multiplied by $6^2/28.6^2$.

When this conversion formula is applied, the air resistance of 2.0 (sec/100mL) obtained with the inner diameter of 6 mm is converted to the air resistance of 0.09 (sec/100mL) obtained with the inner diameter of 28.6 mm. On the other hand, the air resistance of 5.8 (sec/100mL) obtained with the inner diameter of 28.6 mm is converted to the air resistance of 132 (sec/100mL) obtained with the inner diameter of 6 mm.

The electrical conductivity may be a reciprocal of a resistance value of the interlayer between an outermost surface of the anode body and an outermost surface of the cathode body.

The electrical conductivity may be a reciprocal of a combined resistance of a resistance of the conductive polymer, a resistance of the electrolytic solution, and a resistance of the separator.

The electrical conductivity may be a reciprocal of a value obtained by subtracting an element resistance that is a combined resistance of an anode lead terminal resistance, an anode stitch resistance and an anode body resistance that are an anode resistance component, and a cathode lead terminal resistance, a cathode stitch resistance and a cathode body resistance that are a cathode resistance component from an ESR measured at a self resonant frequency.

The separator may have the air resistance of 5.5 (sec/100mL) or less.

The separator may have the air resistance of 0.2 (sec/100mL) or more. The air resistance of 0.2 (sec/100mL) obtained using a gasket with an inner diameter of 28.6 mm is converted to the air resistance of 4.5 (sec/100mL) obtained using a gasket with an inner diameter of 6 mm.

The electrical conductivity of the interlayer may be 60 (S) or more and less than 180 (S).

The cathode body may include a cathode foil formed of valve metal and a conductive layer laminated on the cathode foil.

The electrical conductivity of the interlayer may be 63 (S) or more and less than 180 (S).

The electrical conductivity of the interlayer may be 63 (S) or more and less than 170 (S).

The interlayer may be impregnated with a conductive polymer solution to which the conductive polymer is dispersed or dissolved.

To address the above problems, a manufacturing method of a solid electrolytic capacitor of the present embodiment includes: a process of forming an anode body having a dielectric film; a process of forming a cathode body facing the anode body; and a process of forming an interlayer intervening between the anode body and the cathode body and containing a conductive polymer, an electrolytic solution, and a separator, in which the separator contains a fibrillated fiber and has an air resistance of 5.8 (sec/100mL) or less, and an electrical conductivity of the interlayer is adjusted to 55 (S) or more and less than 180 (S).

The interlayer may be impregnated with a conductive polymer solution to which the conductive polymer is dispersed or dissolved.

## EFFECT OF INVENTION

According to the present disclosure, a solid electrolytic capacitor can suppress an increase of the equivalent series resistance and reduction of the capacitance under the high-temperature environment even when using both the conductive polymer and the electrolytic solution and containing the fibrillated fiber as a separator.

## BRIEF DESCRIPTION OF DRAWINGS

Fig. 1 is a scatter plot indicating the ESR change rate of Examples 1 to 9 and Comparative Examples 1 to 3.
Fig. 2 is a scatter plot indicating the Cap change rate of Examples 1 to 9 and Comparative Examples 1 to 3.
Fig. 3 is a scatter plot indicating the ESR change rate of Examples 1 to 12 and Comparative Examples 1 to 4.
Fig. 4 is a scatter plot indicating the Cap change rate of Examples 1 to 12 and Comparative Examples 1 to 4.
Fig. 5 is a bar graph indicating the ESR change rate of Examples 1 to 12 and Comparative Examples 1 to 4.
Fig. 6 is a bar graph indicating the Cap change rate of Examples 1 to 12 and Comparative Examples 1 to 4.
Fig. 7 illustrates the relationship between the connection position of the anode lead terminal and the anode body, and the cathode lead terminal and the cathode body.
Fig. 8 is an equivalent circuit diagram illustrating the resistance of the solid electrolytic capacitor.

## EMBODIMENTS

Hereinafter, a solid electrolytic capacitor and a manufacturing method thereof according to the embodiments of the present disclosure will be described. Note that the present disclosure is not limited to the following embodiments.

(Solid Electrolytic Capacitor)

A solid electrolytic capacitor includes a capacitor element. The capacitor element includes an anode body, a cathode body, and an interlayer. A dielectric film is formed on a surface of the anode body. The anode body and the cathode body are arranged to face each other via the interlayer. The interlayer intervenes between the dielectric film of the anode body and the cathode body. This interlayer is configured by a conductive polymer, an electrolytic solution, and a separator.

The interlayer adheres to the dielectric film of the anode body and acts as a true cathode. The conductive polymer creates a conductive path between the anode body and the cathode body through charge transfer. The electrolytic solution creates a conductive path between the anode body and the cathode body through ion transfer. The separator supports the conductive polymer layer to serve as a framework of the interlayer and prevents a short circuit of the anode body and the cathode body.

The solid electrolytic capacitors are classified into either of a wound-type or a laminated-type. In the laminated-type, the anode body and the cathode body are alternately laminated via the separator. In the wound-type, the anode body and the cathode body are wound via the separator. In the wound-type, the anode body, the cathode body, and the separator are strip-shape foil bodies. In the wound-type, the anode body, the cathode body, and the separator are overlapped so that one ends of the separator and the cathode body protrude from one end of the anode body. Then, the protruding separator and cathode body are wound first to produce a winding core, and consequently, layers of the anode body, the cathode body, and the separator are wound with the winding core as a winding shaft.

An anode lead terminal is connected to the anode body and a cathode lead terminal is connected to the cathode body, and both terminals are drawn outside the capacitor element. The anode lead terminal and the cathode lead terminal are electrically and mechanically connected to the anode body and the cathode body by cold-welding, stitching, ultrasonic welding, or laser welding, etc. The solid electrolytic capacitor is electrically connected to a mounting board via these anode lead terminals and the cathode lead terminal. By electrically connecting the solid electrolytic capacitor and the mounting board, the solid electrolytic capacitor becomes a passive element that gains the capacitance by dielectric polarization of the dielectric film and stores and discharges electric charge.

The capacitor element is housed in an outer casing with one end closed and the other end opened and is sealed in the outer casing by a sealing body. The sealing body is clamped from outside the outer casing. After the capacitor element is sealed in the outer casing, aging process is performed to complete the production of the solid electrolytic capacitor.

(Interlayer)

The separator of the interlayer contains fibrillated fiber. The fibrillated fiber is produced so that fine fibers branch out from a surface of the original fiber. For example, the fibrillation can be performed by beating. The separator containing the fibrillated fiber has the air resistance of 5.8 (sec/100mL) or less.

The air resistance is also called a Gurley value and is a time required for 100 mL of air to pass through the separator. The air resistance is measured by the Gurley method in accordance with JIS P8117:2009. A gasket with the inner diameter of 28.6 mm is used for the measurement. However, for the separator with the air resistance of 1 (sec/100mL) or less, a gasket with the inner diameter of 6 mm is used for the measurement, and the result value is converted into a value measured with the inner diameter of 28.6 mm. In detail, the conversion formula in which the value obtained with the inner diameter of 6 mm is multiplied by $6^2/28.6^2$ is used.

Note that, the air resistance of 5.8 (sec/100mL) obtained with the inner diameter of 28.6 mm is converted into the air resistance of 132 (sec/100mL) obtained with the inner diameter of 6 mm based on this conversion formula.

Furthermore, the electrical conductivity of the interlayer is 55 (S) or more and less than 180 (S). The electrical conductivity of the interlayer is a reciprocal of a resistance value of the interlayer between an outermost surface of the anode body and an outermost surface of the cathode body. In detail, the electrical conductivity of the interlayer is a reciprocal of the combined resistance of the resistance of the conductive polymer, the resistance of the electrolytic solution, and the resistance of the separator.

A method for calculating the electrical conductivity of the interlayer involves subtracting the element resistance that is the combined resistance of the anode lead terminal resistance, the anode stitch resistance and the anode body resistance that are the anode resistance component, and the cathode lead terminal resistance, the cathode stitch resistance and the cathode body resistance that are the cathode resistance component from the ESR of the solid electrolytic capacitor measured at a self resonant frequency. The self resonant frequency is a frequency where phases of voltage and current measured at each frequency are the same. At the self resonant frequency, capacitive reactance ($1/\omega C$) and the inductive reactance ($\omega L$) are canceled, and the ESR between the outermost surface of the anode body and the outermost surface of the cathode body can be obtained. In the frequency range where the capacity is exhibited in the deep portions of the enlarged surface layer structure of the anode body and the enlarged surface layer structure of the cathode body, it is necessary to consider the internal structure of the enlarged surface layer and the concentration variation of the conductive polymer within the enlarged surface layer, and measuring the ESR at the self resonant frequency simplifies the adjustment of the electrical conductivity of the interlayer.

Firstly, the ESR of the solid electrolytic capacitor measured at the self resonant frequency may consist of the combined resistance of the anode lead terminal resistance and the cathode lead terminal resistance, the anode stitch resistance and the cathode stitch resistance, the anode body resistance and the cathode body resistance, and the resistance per 1 mm in the longitudinal direction of the interlayer connecting the anode body and the cathode body. The anode stitch resistance and the cathode stitch resistance are the stitch connection resistance of the anode body and the anode lead terminal and the stitch connection resistance of the cathode body and the cathode lead terminal, which may be measured in advance. Here, the anode lead terminal resistance and the cathode lead terminal resistance is a constant value according to the type of the terminal. The anode body resistance and the cathode body resistance are determined according to the length and width of the anode body and the cathode body.

Next, to obtain the combined resistance when forming the capacitor element is formed, the shape of the capacitor element is assumed as follows. The connection point of the anode lead terminal and the anode body is defined as the middle point, and the start-of-winding length that is a length from the start of winding to the connection point of the anode lead terminal and the anode body and the end-of-winding length that is a length between the connection point of the anode lead terminal and the anode body to the end of winding is equal. The connection point of the cathode lead terminal and the cathode body is at a position facing the anode stitch when the anode body and the cathode body are overlapped. Furthermore, the width of the cathode body is the same as the anode body. Fig. 7 illustrates the relationship between the connection point of the anode lead terminal and the anode body and the connection point of the cathode lead terminal and the cathode body when the assumed capacitor element is unfolded.

By utilizing the assumed capacitor element, the ESR of the solid electrolytic capacitor measured at the self resonant frequency can be illustrated in the circuit diagram of Fig. 8. Here, the anode lead terminal resistance ($\Omega$) is $R_{al}$, the anode stitch resistance ($\Omega$) is $R_{as}$, the anode body resistance ($\Omega$/mm) per 1 mm in the longitudinal direction is $R_a$, the cathode lead terminal resistance ($\Omega$) is $R_{cl}$, the cathode stitch resistance ($\Omega$) is $R_{cs}$, the cathode body resistance ($\Omega$/mm) per 1 mm in the longitudinal direction is $R_c$, the interlayer resistance connecting the anode body and the cathode body per 1 mm in the longitudinal direction (Ω) is $R_p$, the length of the anode body in the longitudinal direction (mm) is L, and the start-of-winding length (mm) is 1.

From the circuit diagram illustrated in Fig. 8, the ESR of the solid electrolytic capacitor measured at the self resonant frequency satisfies the following relationship formula 1. The electrical conductivity of the interlayer can be determined by calculating a reciprocal of $R_p$ obtained from the following relationship formula 1.

(Formula 1)

$$\text{When } x_i = \frac{1}{R_p + i(R_a + R_c)},$$

$$\text{ESR at Self Resonant Frequency} = R_{al} + R_{as} + R_{cl} + R_{cs} + \frac{1}{\left(\frac{1}{\sum_{i=0}^{l} x_i} + \frac{1}{\sum_{i=1}^{L-l} x_i}\right)} \quad \cdots (1)$$

Accordingly, when the solid electrolytic capacitor includes both the conductive polymer and the electrolytic solution and contains the fibrillated fiber as the separator, the separator has the air resistance of 5.8 (sec/100mL) or less, and the electrical conductivity of the interlayer is 55 (S) or more and less than 180 (S), the capacitance and the ESR of solid electrolytic capacitor becomes excellent.

That is, in the high range where the air resistance is 5.8 (sec/100mL) at maximum, the fibrillated fibers intertwine with each other using fibrillated fine fibers, improving the strength of the separator. Accordingly, the separator can be thinner. The thinning of the separator enables to make the anode body and the cathode body per unit volume longer, and improves the capacitance of the solid electrolytic capacitor.

However, when the fibrillated fiber with high air resistance is used as the separator, in general, the initial ESR of the solid electrolytic capacitor greatly increases. In this point, when the electrical conductivity of the interlayer is 55 (S) or more and less than 180 (S), the whole interlayer suppresses the increase in the ESR, so that ESR of the solid electrolytic capacitor both at the initial stage and after the solid electrolytic capacitor is exposed to the high-temperature environment for a long time. Also, the deterioration of the capacitance of the solid electrolytic capacitor can be suppressed low even when the solid electrolytic capacitor is exposed under the high-temperature environment for a long time. Note that the initial ESR is ESR before the solid electrolytic capacitor is exposed under the high-temperature environment.

However, if the electrical conductivity of the interlayer is 180 (S) or more, the initial ESR can be suppressed low and the ESR change rate after the solid electrolytic capacitor is exposed under the high-temperature environment for a long time can be suppressed low. However, if the electrical conductivity of the interlayer is 180 (S) or more, the capacitance which has been positively influenced by the high air resistance rapidly deteriorates. If the electrical conductivity of the interlayer is less than 55 (S), the initial ESR becomes high and the ESR change rate after the solid electrolytic capacitor is exposed under the high-temperature environment for a long time rapidly increases.

Preferably, the electrical conductivity of the interlayer is less than 170 (S). When the electrical conductivity is less than 170 (S), the capacitance change rate after the solid electrolytic capacitor is exposed under the high-temperature environment for a long time is further suppressed.

Furthermore, if the air resistance is more than 5.8 (sec/100mL), even when the electrical conductivity of the interlayer is 55 (S) or more and less than 180 (S), the capacitance change rate and the ESR change rate after the solid electrolytic capacitor is exposed under the high-temperature environment for a long time rapidly deteriorate.

Preferably, the air resistance is 0.2 (s/100mL) or more. The air resistance of 0.2 (sec/100mL) obtained with the inner 28.6 mm is converted to the air resistance of 4.5 (sec/100mL) obtained with the inner diameter of 6 mm.

If the air resistance is less than 0.2 (sec/100mL), since the electrical conductivity of the interlayer is 55 (S) or more and less than 180 (S), the ESR is still suppressed low but begins to increase compared with when the electrical conductivity of the interlayer is deviated from said range. However, when the air resistance is 0.2 (sec/100mL) or more, although the air resistance is higher than the range of 0.2 (sec/100mL), the ESR change rate is conversely suppressed low by the combination with the electrical conductivity of the interlayer of 55 (S) or more and less than 180 (S). Of course, the capacitance change rate is also suppressed low because the air resistance becomes higher.

Further preferably, the separator containing the fibrillated fiber has the air resistance of 5.8 (sec/100mL) or less, and the electrical conductivity of the interlayer is 60 (S) or more. When the electrical conductivity of the interlayer is 60 (S) or more, the ESR change rate after the solid electrolytic capacitor is exposed under the high-temperature environment for a long time is further suppressed. Particularly preferably, the separator containing the fibrillated fiber has the air resistance of 5.8 (sec/100mL) or less, and the electrical conductivity of the interlayer is 63 (S) or more. When the electrical conductivity of the interlayer is 63 (S) or more, the ESR change rate after the solid electrolytic capacitor is exposed to the high-temperature environment for a long time is particularly suppressed.

The air resistance of the separator may be adjusted by combining the following methods as appropriate. That is, the air resistance increases as the average fiber diameter of the fibers of the separator becomes smaller. The air resistance increases as the proportion of the fibrillated fibers among the fibers in the separator increases. The air resistance increases as the thickness of the fibers of the separator becomes larger. The air resistance increases as the flatness of the fiber shape of the separator increases. The air resistance varies depending on the fiber type of the separator due to the difference between the shapes and surface structures of the fibers, and the air resistance increases when the fiber is selected from a group of kraft, synthesized fiber, regenerated fiber, and the like compared to a group of manila, esparto, cotton and the like, for example. The airtightness increases by applying calendering after forming the separator by papermaking.

Furthermore, the electrical conductivity of the interlayer may be adjusted by combining the following methods as appropriate. That is, the electrical conductivity increases as the air resistance of the separator decreases. The electrical conductivity increases as the solute concentration of the electrolytic solution increases. The electrical conductivity increases when selecting the solvent of the electrolytic solution and the conductive polymer with good affinity and increasing the degree of swelling of the conductive polymer. For PEDOT:PSS, a highly hydrophilic solvent with hydroxyl groups, such as ethylene glycol, diethylene glycol, and glycerin, are selected, and the content ratio of the selected solvent of the electrolytic solution and the conductive polymer is adjusted. The electrical conductivity increases as the attached amount of the conductive polymer per unit area of the anode body is increased.

The electrical conductivity increases as the viscosity of the conductive polymer dispersion is reduced. The electrical conductivity increases as high boiling point solvents are added to conductive polymer dispersion. The electrical conductivity increases as the conductive polymer dispersion is uniformly permeated in the separator. In detail, the electrical conductivity can be adjusted by adjusting the degree of depressurization or pressurization when impregnating the capacitor element with the conductive polymer dispersion within a range where the uniform permeation according to the composition of the conductive polymer dispersion and the property of the separator. Furthermore, in the drying process, the electrical conductivity increases by slowly drying the capacitor element impregnated with the conductive polymer dispersion for a long time, or further attaching the high boiling point solvent to the capacitor element and drying the capacitor element.

The electrical conductivity increases when forming a plurality of dividing portions in the dielectric film of the anode body. The dividing portions divide the dielectric film in the depth direction from the surface of the anode body toward the core and extend in the winding-axial direction of the winding. The dividing portions are formed by cracking, splitting, cutting, notching, or digging the surface layer of the anode body. That is, examples of actual dividing portions are cracks, splits, cutouts, notches, or holes. When the dividing portions are formed, the anode body easily follows the winding-axial side when winding the capacitor element, so that the capacitor element is tightly wound. This tight winding crushes the separator, increasing the electrical conductivity of the interlayer. Therefore, the electrical conductivity can be adjusted by adjusting the number of the dividing portions, the width of the groove, and the strength of winding, etc.

(Separator)

The separator forming the interlayer includes cellulose such as kraft, Manila hemp, esparto, hemp, rayon, and mixed papers thereof, polyester resins such as polyethylene terephthalate, polybutylene terephthalate, polyethylene naphthalate, and derivatives thereof, polytetrafluoroethylene resins, polyvinylidene fluoride resins, vinylon resins, polyamide resins such as aliphatic polyamide, semi-aromatic polyamide, and total aromatic polyamide, polyimide resins, polyethylene resins, polypropylene resins, trimethylpentene resins, polyphenylene sulfide resins, acrylic resins, polyvinyl alcohol resins, and the like, and the resins may be used alone or in mixture.

(Conductive Polymer)

The conductive polymer is a self-doped conjugated polymer doped by intramolecular dopants or a conjugated polymer doped by external dopant molecules. The conjugated polymer is obtained by chemical oxidative polymerization or electrolytic oxidative polymerization of monomers with n-conjugated double bonds or derivatives thereof.

Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used alone or in combination of two or more, and may further be copolymers of two or more types of monomers.

Among the above conjugated polymers, conjugated polymers formed by polymerizing thiophene or derivatives thereof are preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon.

As the dopant, known dopants may be used without limitation. The dopant may be used alone or in combination of two or more. Also, the dopant may be polymers or monomers. For example, the dopant may be polyanions and organic acids. For example, the polyanion may be polyvinyl sulfonic acid, polystyrene sulfonic acid, polyallyl sulfonic acid, polyacrylic sulfonic acid, polymethacrylic sulfonic acid, poly(2-acrylamide-2-methylpropanesulfonic acid), polyisoprene sulfonic acid, polyacrylic acid, polymethacrylic acid, and polymaleic acid, etc.

For such a conductive polymer, for example, poly(3,4-ethylenedioxythiophene) doped with polystyrene sulfonic acid may be used, and hereinafter this conductive polymer is referred to as PEDOT:PSS.

The conductive polymer may be formed within the capacitor element using a conductive polymer solution. The conductive polymer solution is a dispersion or a solution in which the conductive polymer is dispersed or dissolved. The wound body to which the anode body and the separator are added is immersed in the conductive polymer solution to impregnate the wound body with the conductive polymer solution. Furthermore, the conductive polymer solution is applied on the anode body. The conductive polymer solution may be immersed or applied once or multiple times. The wound body may be impregnated with the conductive polymer solution while depressurizing the interior of the wound body, or while pressurizing the conductive polymer solution in addition to depressurizing the interior of the wound body.

A dispersion medium or a solvent of the conductive polymer solution may be dispersion media or solvents in which particles or powder of the conductive polymer is dispersed or dissolved. The dispersion medium or the solvent of the conductive polymer solution may be water, or mixtures of water and organic solvents. Suitable organic solvents may be polar solvents, alcohols, esters, hydrocarbons, carbonate compounds, ether compounds, acyclic ethers, heterocyclic compounds, and nitrile compounds, etc.

The pH of the conductive polymer solution is adjusted to improve the acidity so as to suppress the dissolution of the anode body, the cathode body, and the separator, and additives may be added if necessary. When the pH is in the range of 2 to 9, the dissolution of the separator, the anode body, and the cathode body is suppressed. For example, the pH adjustment agent may be ammonia water, sodium hydroxide, primary amines, secondary amines, and tertiary amines, etc. For example, the additive may be organic binders, surfactants, dispersants, defoamers, coupling agents, antioxidants, and UV absorbers, etc.

A polyhydric alcohol may be added to the conductive polymer solution if necessary. The polyhydric alcohol may be sorbitol, ethylene glycol, diethylene glycol, triethylene glycol, polyoxyethylene glycol, glycerin, polyoxyethylene glycerin, xylitol, erythritol, mannitol, dipentaerythritol, pentaerythritol, or combination of two or more. The polyhydric alcohol has high boiling point and easily remains in the conductive polymer layer after the drying process. The polyhydric alcohol changes the higher-order structure of the conductive polymer and reorients the crystalline structure of the polymer chain. Therefore, the polyhydric alcohol improves the carrier mobility and improves the electrical conductivity of the interlayer.

Note that, the conductive polymer may be formed within the solid electrolytic capacitor by immersing the wound body in a solution of monomers that are monomer units of the conductive polymer and the oxidizing agent or the supporting electrolyte for polymerization reaction while taking measures to suppress dissolution of the separator.

(Electrolytic Solution)

The electrolytic solution is a solution formed by adding solutes to solvents. The solute is organic acid or salt thereof, inorganic acid or salt thereof, or composite compounds of organic acid and inorganic acid or salt thereof, and is ion dissociable salt which dissociates to anionic components and cationic components. The solvent may be used alone or in combination of two or more.

The organic acid that becomes the anionic component as a solute may be carboxylic acids such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, resorcylic acid, phloroglucinic acid, gallic acid, gentisic acid, protocatechuic acid, pyrocatechuic acid, trimellitic acid, and pyromellitic acid, phenols, and sulfonic acids, etc. Furthermore, the inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartaric acid, borodicitric acid, borodiphthalic acid, borodi(2-hydroxy) isobutyric acid, borodiresorcylic acid, borodimethylsalicylic acid, borodinaphthoic acid, borodimandelic acid, and borodi(3-hydroxy) propionic acid, etc.

Furthermore, at least one salt of the organic acid, the inorganic acid, and the composite compound of organic acid and inorganic acid may be ammonium salts, quaternary ammonium salts, quaternary amidinium salst, amine salts, sodium salts, and potassium salts, etc. Quaternary ammonium ions of the quaternary ammonium salts may be tetramethylammonium, triethylmethylammonium, and tetraethylammonium, etc. The quaternary amidinium salt may be ethyldimethylimidazolinium and tetramethylimidazolinium, etc. The amine salts may be salts of primary amines, secondary amines, and tertiary amines. The primary amines may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

The solvents may be either protic polar solvents or aprotic polar solvents. Typically, the protic polar solvent may be monohydric alcohols, polyhydric alcohols, and oxyalcohol compounds, etc. Typically, the aprotic polar solvent may be sulfones, amides, lactones, cyclic amides, nitriles, and sulfoxides, etc.

Furthermore, other additives may be added to the electrolytic solution. The additives may be complex compounds of boric acid and polysaccharides (mannitol, sorbitol, etc.), complex compounds of boric acid and polyhydric alcohol, borate esters, nitro compounds, phosphate esters, and colloidal silica, etc. These may be used alone or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and p-nitrophenol, etc. Furthermore, the electrolytic solution may contain polymeric solvents as a withstand voltage improving agent. The polymeric solvent may be polyols to which alkylene oxide is added, and derivatives thereof.

The capacitor element is immersed in the electrolytic solution to impregnate the electrolytic solution in voids of the capacitor element. To impregnate the electrolytic solution in finer voids, depressurization process or pressurization process may be performed, if necessary. The impregnation process may be repeated multiple times. For example, the interior of the capacitor element may be depressurized, and the electrolytic solution may be injected inside the capacitor element while pressurizing the electrolytic solution.

(Anode Body)

The anode body adhering to the interlayer is a foil body formed of valve metal and is an anode foil, for example. The foil body may be formed by elongating the valve metal, or may be formed by sintering powder of the valve metal. The valve metal is aluminum, tantalum, niobium, niobium oxide, titanium, hafnium, zirconium, zinc, tungsten, bismuth, and antimony, etc.

An enlarged surface layer is formed on one or both surfaces of the anode body. The enlarged surface layer is an etching layer in which etching is performed on the foil body, a sintered layer in which powder of the valve metal is sintered, or a vapor-deposited layer in which particles of the valve metal are vapor-deposited on the foil body. That is, the enlarged surface layer has a porous structure and is formed by tunnel-shaped pits dug in the thickness direction of the foil, spongy pits in which fine voids are spatially interconnected and expanded to a layer of spongelike pits, or voids between dense powder bodies or particles.

The dielectric film is formed on one or both surfaces of the anode body on which the enlarged surface layer is formed. When the enlarged surface layer is formed, the dielectric film is formed on the surface layer of the enlarged surface layer along the unevenness of the enlarged surface layer. Typically, the dielectric film is an oxide film formed on the surface layer of the anode body, and when the anode body is made of aluminum, the dielectric film is an aluminum oxide layer obtained by oxidizing the surface of the enlarged surface layer. In the chemical conversion treatment to form the dielectric film, voltage is applied on the anode body in a chemical conversion solution to achieve the desired withstand voltage. The chemical conversion solution is a solution without halogen ions, and for example is phosphoric acid-based chemical conversion solution such as ammonium dihydrogen phosphate, boric acid-based chemical conversion solution such as ammonium borate, and adipic acid-based chemical conversion solution such as ammonium adipate, etc.

(Cathode Body)

The cathode body is an elongated foil body formed of the valve metal and for example is a cathode foil. The enlarged surface layer is formed on the cathode body, like the anode body. The cathode body may be a plane foil without the enlarged surface layer. The cathode body may have a natural oxide film, or a thin oxide film of about 1 to 10 Vfs formed by chemical conversion treatment. The natural oxide film is formed when oxygen in the air reacts with the cathode body.

The cathode body may include a conductive layer. The conductive layer is laminated on the cathode foil. When the cathode body includes the conductive layer and the conductive layer and the interlayer contact each other, the ESR change rate after the solid electrolytic capacitor is exposed under the high-temperature environment for a long time is further suppressed low, and also the capacitance change rate is further suppressed low.

The conductive layer may mainly contain inorganic substances or inorganic compounds. The inorganic substances and inorganic compounds may be titanium, zirconium, tantalum, niobium, and nitrides or carbides thereof, aluminum carbide, carbon material, and composite material or mixtures thereof. In detail, the conductive layer may be a conductive layer of carbon material, a conductive layer of titanium nitride, a conductive layer of titanium carbide, a conductive layer of a mixture of titanium and carbon material, a conductive layer of a composite of aluminum carbide ($Al_4C_3$) and titanium oxide ($TiO_2$).

For example, the conductive layer containing carbon material contains graphite, carbon black, activated carbon, carbon nanohorns, fibrous carbon, and mixtures thereof as carbon material. The graphite may be natural graphite, artificial graphite, and graphitized Ketjen black, etc. The carbon black may be Ketjen black, acetylene black, channel black, and thermal black, etc. Source material for the activated carbon is natural plant tissues such as coconut shell, synthetic resins such as phenol, and activated carbon made from fossil fuel such as coal, coke, and pitch. The fibrous carbon may be carbon nanotubes and carbon nanofibers, etc.

The formation method of the carbon layer on the cathode foil may be vacuum vapor-deposition, sputtering, ion plating, CVD, coating, electrolytic plating, or electroless plating, etc. In a case of the application, the carbon material is dispersed in a dispersion solvent to form a slurry, and the slurry is applied and dried on the cathode foil by slurry casting, doctor blading, or spray spraying, etc. In a case of the vapor-deposition, the carbon material is evaporated by electrical heating in vacuum or is evaporated by electron beam irradiation in vacuum to form a film of the carbon material on the cathode foil. Furthermore, in the case of the sputtering, the cathode foil and a target formed of carbon material are placed in a vacuum container, inert gas is introduced into the vacuum container, and voltage is applied to bombard the target with plasma inert gas, so that particles of carbon material beaten out from the target are deposited on the cathode foil.

After laminating the conductive layer and the cathode foil, it is preferable to pressure-weld the carbon layer and the cathode foil by press processing. For example, in the press processing, the cathode body formed by the conductive layer and the cathode foil is sandwiched by a press roller, and press line pressure is applied. By the press processing, the conductive layer is pressed into fine pores of the enlarged surface layer and is deformed along the uneven surface of the enlarged surface layer by the press processing. Since the adhesion of the conductive polymer and the conductive layer is improved by this pressure-welded structure, the ESR of the solid electrolytic capacitor can be easily controlled by the electrical conductivity of the interlayer.

The capacitor element is housed in an outer casing with one end closed and the other end opened and is sealed in the outer casing by a sealing body. The sealing body is clamped from outside the outer casing. After the capacitor element is sealed in the outer casing, aging process is performed to complete the production of the solid electrolytic capacitor. In the aging process, DC voltage is applied on the solid electrolytic capacitor to repair the defects such as in the dielectric oxide film.

Hereinafter, the solid electrolytic capacitors of the examples will be described in more detail. Note that the present disclosure is not limited to the following examples.

(Examples 1 to 9)

The solid electrolytic capacitors of Examples 1 to 9 and Comparative Examples 1 to 3 were produced. In Examples 1 to 9 and Comparative Examples 1 to 3, the same anode bodies, separators, and electrolytic solution were used.

The anode body is the anode foil formed of aluminum. The enlarged surface layer formed by spongy etching pits was formed on the anode foil by etching. Next, the dividing portions were formed on the anode foil, in which both surfaces had been etched, using physical methods. Furthermore, chemical conversion treatment was performed on the anode foil with the dividing portions to form the dielectric film. In the chemical conversion treatment, the anode foil was immersed in an ammonium adipate aqueous solution with the liquid temperature of 85 °C, and voltage was applied until the voltage reached 65 V while applying the constant current of 2 mA.

The cathode body is formed by laminating the conductive layer on the cathode foil formed of aluminum. In Examples 1 to 8 and Comparative Examples 1 to 3, the enlarged surface layer formed by the spongy etching pits was formed on the cathode foil by etching. Next, the oxide film was formed on the cathode foil by chemical conversion treatment. In the chemical conversion treatment, the cathode foil was immersed in an ammonium adipate aqueous solution with the liquid temperature of 85 °C, and voltage was applied until the voltage reached 3 V while applying the constant current of 2 mA. Furthermore, the conductive layer of titanium carbide (TiC) was formed on the cathode foil with the oxide film by vacuum arc vapor-deposition.

In Example 9, the conductive layer of carbon is formed on the cathode body. The conductive layer is laminated on the cathode foil by applying a slurry containing carbon particles on the cathode foil by coating, drying the slurry, and pressure-welding the slurry on the cathode foil by press processing.

Then, the anode lead terminal and the cathode lead terminal were connected to the anode body and the cathode body by stitching. The anode body and the cathode body were overlapped via the separator and were wound to produce the capacitor element.

The capacitor element was impregnated with the conductive polymer solution to attach particles of the conductive polymer within the dielectric film of the anode foil, the cathode foil, and the separator. Particles of PEDOT:PSS were dispersed in the conductive polymer solution. The conductive polymer solution with the concentration of the conductive polymer according to each of Examples and Comparative Examples were prepared. The capacitor element was impregnated with the conductive polymer solution under the depressurized environment of 30 kPa for 3 minutes. After the impregnation of the conductive polymer solution, the wound body was dried at room temperature for 10 minutes and was further dried at 120 °C or 150 °C.

Next, electrolytic solution was prepared according to each of Examples and each Comparative Examples. The electrolytic solution was produced by adding ammonium azelate salt to ethylene glycol. The content of the added ammonium azelate salt was 0.2 (mol/kg) of azelaic acid and 0.2 (mol/kg) of ammonium ions. Furthermore, phosphoric acid esters and p-nitrobenzoic acid were added to the electrolytic solution as an additive at the total of 2 wt%.

The capacitor element was impregnated with this electrolytic solution. The capacitor element was immersed in the electrolytic solution to impregnate the capacitor element with the electrolytic solution under the depressurized environment. Then, the capacitor element was housed in the outer casing with one end closed and the other end opened. A sealing rubber was inserted to the opening of the aluminum casing, and the aluminum casing was crimped from outside to seal the capacitor element.

Here, the solid electrolytic capacitors of Examples 1 to 9 and Comparative Examples 1 to 3 had different electrical conductivity of the interlayer in accordance with the size of the capacitor element, the amount of the conductive polymer, the particle size of the conductive polymer, the component of the conductive polymer solution, and the number of impregnation of the conductive polymer solution. The size of the capacitor element, the amount of the conductive polymer, the particle size of the conductive polymer, the component of the conductive polymer solution, the number of impregnation of the conductive polymer solution, and the electrical conductivity of the interlayer in Examples 1 to 9 and Comparative Examples 1 to 3 are shown in Table 1 below. The main solvent of the conductive polymer solution was water, and the components of the conductive polymer solution shown in Table 1 below is a ratio of ethylene glycol in the solvent.

[Table 1]

| | Amount of Conductive Polymer ($mg/cm^2$) | Electrical Conductivity of Interlayer (S) | Size of Capacitor Diameter×Height (mm) | Particle Size of Conductive Polymer (D50) (mm) | Concentration of Conductive Polymer (wt%) | Addition Amount of Ethylene Glycol (wt%) | Impregnation of Conductive Polymer Solution |
|---|---|---|---|---|---|---|---|
| Comparative Example 1 | 0.17 | 27 | 5.9 × 3.2 | 10 | 0.8 | 0 | Once |
| Comparative Example 2 | 0.21 | 41 | 5.9 × 3.2 | 10 | 1.0 | 0 | Once |
| Example 1 | 0.31 | 57 | 5.9 × 3.2 | 10 | 1.4 | 0 | Once |
| Example 2 | 0.27 | 62 | 5.9 × 3.2 | 450 | 1.4 | 20 | Once |
| Example 3 | 0.30 | 66 | 5.9 × 3.2 | 450 | 1.6 | 10 | Once |
| Example 4 | 0.34 | 71 | 5.9 × 3.2 | 450 | 1.8 | 0 | Once |
| Example 5 | 0.37 | 77 | 5.9 × 3.2 | 10 | 1.8 | 0 | Once |
| Example 6 | 0.35 | 82 | 5.9 × 3.2 | 10 | 1.6 | 10 | Once |
| Example 7 | 0.17 | 140 | 9.7 × 6.3 | 450 | 1.0 | 40 | Once |
| Example 8 | 0.24 | 159 | 9.7 × 6.3 | 10 | 1.4 | 20 | Twice |
| Example 9 | 0.36 | 177 | 9.7 × 7.8 | 450 | 1.4 | 20 | Twice |
| Comparative Example 3 | 0.38 | 209 | 9.7 × 7.8 | 10 | 1.4 | 20 | Twice |

The amount of the conductive polymer was calculated from the change in weight of the capacitor element before and after the impregnation of the conductive polymer solution, the concentration of the conductive polymer in the conductive polymer solution, and the apparent surface area of the anode foil disregarding the unevenness of the enlarged surface layer. The apparent surface area of the anode foil disregarding the unevenness of the enlarged surface layer is the projected area of the anode foil when the anode foil is projected along the foil thickness direction.

The electrical conductivity was calculated as follows. Firstly, the ESR at the self resonant frequency of the solid electrolytic capacitors of Examples 1 to 9 and the Comparative Examples 1 to 3 was measured. The ESR was measured using an LCR meter (Agilent ZM2376 from NF Corporation). The ambient temperature in the measurement was 25 °C, the AC current level was 1.0 Vrms sine wave, and the measurement frequency was in the range of 1 Hz to 10 MHz. The phase difference of voltage and current at each frequency was measured, and the self resonant frequency was a frequency where phases of voltage and current were the same. The self resonant frequencies of Examples 1 to 6 and Comparative Examples 1 and 2 were 500 kHz, the self resonant frequencies of Examples 7 and 8 were 300 kHz, and the self resonant frequencies of Example 9 and Comparative Example 3 were 200 kHz.

Accordingly, the electrical conductivity of the interlayer of the Examples 1 to 9 and Comparative Examples 1 to 3 was calculated by obtaining a reciprocal of a value obtained by subtracting the element resistance that was the combined resistance of the anode lead terminal resistance, the anode stitch resistance and the anode body resistance that were the anode resistance component, and the cathode lead terminal resistance, the cathode stitch resistance and the cathode body resistance that were the cathode resistance component from the measurement results of the ESR.

In Examples 1 to 6 and Comparative Examples 1 and 2, the element resistance that was the combined resistance of the anode lead terminal resistance, the anode stitch resistance and the anode body resistance that were the anode resistance component, and the cathode lead terminal resistance, the cathode stitch resistance and the cathode body resistance that were the cathode resistance component was 4.7 mΩ. In Examples 7 and 8, the element resistance was 4.9 mΩ. In Example 9, the element resistance was 5.2 mΩ. In Comparative Example 3, the element resistance was 4.7 mΩ.

(Characteristic Test 1)

The initial ESR, the post-test ESR after the solid electrolytic capacitor was exposed under the temperature environment of 135 °C for 300 hours, the ESR change rate of the post-test ESR relative to the initial ESR, and the capacitance change rate after the solid electrolytic capacitor was exposed under the temperature environment of 135 °C for 300 hours of the solid electrolytic capacitors of Examples 1 to 9 and Comparative Examples 1 to 3 were measured and calculated. The ESR and the capacitance (Cap) were measured using an LCR meter (ZM2376 from NF Corporation). The ambient temperature in the measurement was 25 °C, the AC current level was sine wave of 1.0 Vrms, and the measurement frequency was 120 Hz.

The measurement results and the calculation results of the change rates of Examples 1 to 9 and the Comparative Examples 1 to 3 are shown in Table 2 below.

[Table 2]

| | Separator | Air Permeability (sec/100mL) | Amount of Conductive Polymer (mg/cm$^2$) | Electrical Conductivity of Interlayer (S) | Initial ESR (Ω) | Post-Test ESR (Ω) | After 300 Hours at 135°C | |
|---|---|---|---|---|---|---|---|---|
| | | | | | | | ESR Change Rate | Capacitance Change Rate |
| Comparative Example 1 | Fibrillated Fiber | 5.5 | 0.17 | 27 | 0.067 | 0.238 | +255% | -4.3% |
| Comparative Example 2 | Fibrillated Fiber | 5.5 | 0.21 | 41 | 0.044 | 0.124 | +181% | -2.4% |
| Example 1 | Fibrillated Fiber | 5.5 | 0.31 | 55 | 0.032 | 0.064 | +102% | -1.8% |
| Example 2 | Fibrillated Fiber | 5.5 | 0.27 | 60 | 0.032 | 0.057 | +77% | -2.0% |
| Example 3 | Fibrillated Fiber | 5.5 | 0.30 | 63 | 0.030 | 0.050 | +63% | -2.0% |
| Example 4 | Fibrillated Fiber | 5.5 | 0.34 | 67 | 0.029 | 0.048 | +67% | -2.0% |
| Example 5 | Fibrillated Fiber | 5.5 | 0.37 | 73 | 0.026 | 0.043 | +64% | -1.9% |
| Example 6 | Fibrillated Fiber | 5.5 | 0.35 | 77 | 0.024 | 0.039 | +61% | -1.7% |
| Example 7 | Fibrillated Fiber | 5.5 | 0.17 | 140 | 0.014 | 0.018 | +37% | -2.9% |
| Example 8 | Fibrillated Fiber | 5.5 | 0.24 | 168 | 0.012 | 0.015 | +23% | -2.0% |
| Example 9 | Fibrillated Fiber | 5.5 | 0.36 | 177 | 0.013 | 0,015 | +16% | -5.4% |
| Comparative Example 3 | Fibrillated Fiber | 5.5 | 0.38 | 209 | 0.011 | 0.013 | +18% | -11.4% |

Based on the above Table 2, Figs. 1 and 2 illustrate the ESR change rate and the Cap change rate of Examples 1 to 9 and Comparative Examples 1 to 3. In Fig. 1, the horizontal axis is the electrical conductivity of the interlayer, and the vertical axis is the ESR change rate. In Fig. 2, the horizontal axis is the electrical conductivity of the interlayer, and the vertical axis is the Cap change rate.

As shown in Table 2 and Fig. 1, in Comparative Examples 1 and 2 using the fibrillated fiber as a separator, the air resistance using the gasket with the inner diameter of 28.6 mm was 5.5 (sec/100mL), that is, the converted air resistance using the gasket with the inner diameter of 6 mm was 125 (sec/100mL), which is significantly high. Therefore, also in Comparative Example 2, the initial ESR was 0.044 Ω, that is, close to 45 mΩ.

However, in Examples 1 to 9 and Comparative Example 3, although the fibrillated fiber which had exhibited the air resistance of 5.5 (sec/100mL) was used as a separator, since the electrical conductivity of the interlayer was 55 (S) or more, the initial ESR was suppressed to 0.032 Ω or less. Also, the ESR change rate was +102 % of Example 1 at maximum. The ESR change rate of +102 % was equivalent to the ensured range of +100 %. Even the ESR change rate of Example 1 was suppressed to about 56 % of the ESR change rate of Comparative Example 2.

Furthermore, as shown in Table 2 and Fig.2, in Examples 1 to 9, the Cap change rate was also suppressed low. However, in Comparative Example 3 in which the electrical conductivity of the interlayer was more than 180 (S), the initial ESR was excellent and the ESR change rate was excellent, but the capacitance greatly decreased when exposed to the high-temperature environment.

Accordingly, it was observed that, when the fibrillated fiber with the air resistance of 5.5 (sec/100mL) that is less than 5.8 (sec/100mL) was used as a separator and the electrical conductivity of the interlayer was 55 (S) or more and less than 180 (S), the initial ESR became excellent and the ESR change rate and Cap change rate after the solid electrolytic capacitor was exposed under the high-temperature environment for a long time could be suppressed low.

(Examples 10 to 12)

Furthermore, the solid electrolytic capacitors of Examples 10 to 12 and Comparative Examples 4 were produced. The conductive layer was not formed on the cathode body of Example 10. Other configuration of Example 10 was the same Example 2. In Example 10, the element resistance was 4.2 mΩ, and the self resonant frequency was 500 kHz. As a result, the electrical conductivity of the interlayer of Example 10 was 62 (S), which was close to Example 2.

The separator of Example 11 was a mixture of fibrillated cellulose fiber and natural fiber, and the air resistance using the gasket with the inner diameter of 28.6 mm was 0.20 (sec/100mL). Other configuration of Example 11 was the same Example 6. In Example 11, the element resistance was 6.1 mΩ, and the self resonant frequency was 500 kHz. As a result, the electrical conductivity of the interlayer of Example 11 was 69 (S).

The separator of Example 12 was fibrillated cellulose fiber, and the air resistance using the gasket with the inner diameter of 28.6 mm was 5.7 (sec/100mL). Other configuration of Example 12 was the same Example 2. In Example 12, the element resistance was 4.2 mΩ, and the self resonant frequency was 500 kHz. As a result, the electrical conductivity of the interlayer of Example 12 was 61 (S), which was close to Example 2.

The separator of Comparative Example 4 was fibrillated cellulose fiber, and the air resistance using the gasket with the inner diameter of 28.6 mm was 5.9 (sec/100mL). Other configuration of Comparative Example 4 was the same Example 2. In Comparative Example 4, the element resistance was 4.2 mΩ, and the self resonant frequency was 500 kHz. As a result, the electrical conductivity of the interlayer of Comparative Example 4 was 64 (S), which was close to Example 2.

(Characteristic Test 2)

The initial ESR, the post-test ESR after the solid electrolytic capacitor was exposed under the temperature environment of 135 °C for 300 hours, the ESR change rate of the post-test ESR relative to the initial ESR, and the capacitance change rate after the solid electrolytic capacitor was exposed under the temperature environment of 135 °C for 300 hours of the solid electrolytic capacitors of Examples 10 to 12 and Comparative Examples 4 were measured and calculated. The measurement method and the measurement condition of the ESR and the capacitance (Cap) was the same as Examples 1 to 9. The measurement method of the amount of the conductive polymer was the same as Examples 1 to 9.

The measurement results and the calculation results of the change rates of Examples 10 to 12 and the Comparative Examples 4 together with Example 2 are shown in Table 3 below. Note that all of the separators of Example 10 to 12 and Comparative Example 4 contained fibrillated fiber.

[Table 3]

| | Separator | Air Permeability (sec/100mL) | Amount of Conductive Polymer (mg/cm$^2$) | Cathode Body | Electrical Conductivity of Interlayer (S) | After 300 Hours at 135°C | |
|---|---|---|---|---|---|---|---|
| | | | | | | ESR Change Rate | Capacitance Change Rate |
| Example 2 | Fibrillated Fiber | 5.5 | 0.27 | With Conductive Layer | 60 | +77% | -2.0% |
| Example 10 | Fibrillated Fiber | 5.5 | 0.26 | Only Cathode Foil | 62 | +115% | -4.4% |
| | | | | | | | |
| Example 11 | Fibrillated Fiber + Natural Fiber | 0.20 | 0.37 | With Conductive Layer | 69 | +76% | -1.6% |
| Example 2 | Fibrillated Fiber | 5.5 | 0.27 | With Conductive Layer | 60 | +77% | -2.0% |
| Example 12 | Fibrillated Fiber | 5.7 | 0.24 | With Conductive Layer | 60 | +104% | -3.4% |
| Comparative Example 4 | Fibrillated Fiber | 5.9 | 0.38 | With Conductive Layer | 64 | +141% | -7.1% |

Based on the above Table 3, Figs. 3 and 4 illustrate the ESR change rate and the Cap change rate of Examples 10 to 12 and Comparative Examples 4 together with Examples 1 to 9 and Comparative Examples 1 to 3. In Fig. 3, the horizontal axis is the electrical conductivity of the interlayer, and the vertical axis is the ESR change rate. In Fig. 4, the horizontal axis is the electrical conductivity of the interlayer, and the vertical axis is the Cap change rate. Furthermore, Figs. 5 and 6 illustrate bar graphs indicating the ESR change rate and the Cap change rate of Examples 1 to 12 and Comparative Examples 1 to 4. Fig. 5 illustrates the ESR change rate, and Fig. 6 illustrates the Cap change rate.

As shown in above Table 3, and Figs. 3 to 6, Examples 2 and 10 had similar electrical conductivity of the interlayer and the same air resistance of the fibrillated fiber. Example 2 in which the cathode body includes the conductive layer had particularly excellent ESR change rate and capacitance change rate compared to Example 10.

Accordingly, it was observed that the ESR change rate and the Cap change rate could be excellently suppressed by forming the conductive layer at the interface of the fibrillated fiber with high air resistance and the cathode body even when the solid electrolytic capacitor was exposed under the high-temperature environment for a long time.

Furthermore, as shown in above Table 3, and Figs. 3 to 6, Examples 12 using the fibrillated fiber with the air resistance of 5.7 (sec/100mL) as a separator had the ESR change rate close to 100 % and the Cap change rate remaining within the favorable range. In contrast, Comparative Example 4 using the fibrillated fiber with the air resistance of 5.9 (sec/100mL) as a separator had the ESR change rate getting close to 150 % and the Cap change rate nearly twice as worse as other Examples.

Accordingly, it was observed that the separator containing the fibrillated fiber had the air resistance of 5.8 (sec/100mL) or less at maximum even when increased.

Furthermore, as shown in above Table 2, and Figs. 3 to 6, in Examples 2 to 9 with the electrical conductivity of the interlayer of 60 (S) or more, the ESR change rate after the solid electrolytic capacitor was exposed under the high-temperature environment was further suppressed by about 25 % compared to Example 1. In particular, in Examples 3 to 9 with the electrical conductivity of the interlayer of 66 (S) or more, the ESR change rate after the solid electrolytic capacitor is exposed under the high-temperature environment for a long time was further suppressed by about 35 % compared to Example 1.

Accordingly, it was observed that the electrical conductivity of the interlayer is preferably 60 (S) or more and more preferably 63 (S) or more.

Here, focusing on the electrical conductivity of the interlayer, Example 11 had the electrical conductivity of the interlayer of 69 (S) that is above 63 (S) and within particularly excellent range. However, the ESR change rate of Examples 4 and 5 which had similar electrical conductivity of the interlayer remained in 60 % range, whereas the ESR change rate of Example 10 was 76 %. In Example 11, the separator of the fibrillated fiber had the air resistance of 0.20 (sec/100mL) or less.

Thus, it was confirmed that, as the air resistance decreases so that the air resistance obtained with the inner diameter of 28.6 mm becomes 0.2 (sec/100mL), that is, the converted air resistance obtained with the inner diameter of 6 mm becomes 4.5 (sec/100mL), the ESR change rate increases even when the electrical conductivity of the interlayer was in the range of 60 (S) or more and less than 180 (S). Therefore, it was confirmed that, the separator with the electrical conductivity of the interlayer of 60 (S) or more and less than 180 (S) and containing the fibrillated fiber preferably had the air resistance of 0.2 (sec/100mL).

## Claims

**1.** A solid electrolytic capacitor comprising:

an anode body having a dielectric film;
a cathode body facing the anode body; and
an interlayer intervening between the anode body and the cathode body and containing a conductive polymer, an electrolytic solution, and a separator,
wherein:

the separator contains a fibrillated fiber and has an air resistance of 5.8 (sec/100mL) or less, and
an electrical conductivity of the interlayer is 55 (S) or more and less than 180 (S).

**2.** The solid electrolytic capacitor according to claim 1, wherein the electrical conductivity is a reciprocal of a resistance value of the interlayer between an outermost surface of the anode body and an outermost surface of the cathode body.

**3.** The solid electrolytic capacitor according to claim 1, wherein the electrical conductivity is a reciprocal of a combined resistance of a resistance of the conductive polymer, a resistance of the electrolytic solution, and a resistance of the separator.

**4.** The solid electrolytic capacitor according to claim 1, wherein the electrical conductivity is a reciprocal of a value obtained by subtracting an element resistance that is a combined resistance of an anode lead terminal resistance, an anode stitch resistance and an anode body resistance that are an anode resistance component, and a cathode lead terminal resistance, a cathode stitch resistance and a cathode body resistance that are a cathode resistance component from an ESR measured at a self resonant frequency.

**5.** The solid electrolytic capacitor according to any one of claims 1 to 4, wherein the separator has the air resistance of 5.5 (sec/100mL) or less.

**6.** The solid electrolytic capacitor according to any one of claims 1 to 4, wherein the separator has the air resistance of 0.2 (sec/100mL) or more.

**7.** The solid electrolytic capacitor according to any one of claims 1 to 4, wherein the electrical conductivity of the interlayer is 60 (S) or more and less than 180 (S).

**8.** The solid electrolytic capacitor according to any one of claims 1 to 4, wherein the cathode body includes a cathode foil formed of a valve metal, and a conductive layer laminated on the cathode foil.

**9.** The solid electrolytic capacitor according to any one of claims 1 to 4, wherein the electrical conductivity of the interlayer is 63 (S) or more and less than 180 (S).

**10.** The solid electrolytic capacitor according to any one of claims 1 to 4, wherein the electrical conductivity of the interlayer is 63 (S) or more and less than 170 (S).

**11.** The solid electrolytic capacitor according to any one of claims 1 to 4, wherein the interlayer is impregnated with a conductive polymer solution to which the conductive polymer is dispersed or dissolved.

**12.** A method of manufacturing a solid electrolytic capacitor, comprising:

a process of forming an anode body having a dielectric film; a process of forming a cathode body facing the anode body; and
a process of forming an interlayer intervening between the anode body and the cathode body and containing a conductive polymer, an electrolytic solution, and a separator,
wherein:

the separator contains a fibrillated fiber and has an air resistance of 5.8 (sec/100mL) or less, and
an electrical conductivity of the interlayer is adjusted to 55 (S) or more and less than 180 (S).

**13.** The method manufacturing of the solid electrolytic capacitor according to claim 12, wherein the interlayer is impregnated with a conductive polymer solution to which the conductive polymer is dispersed or dissolved.

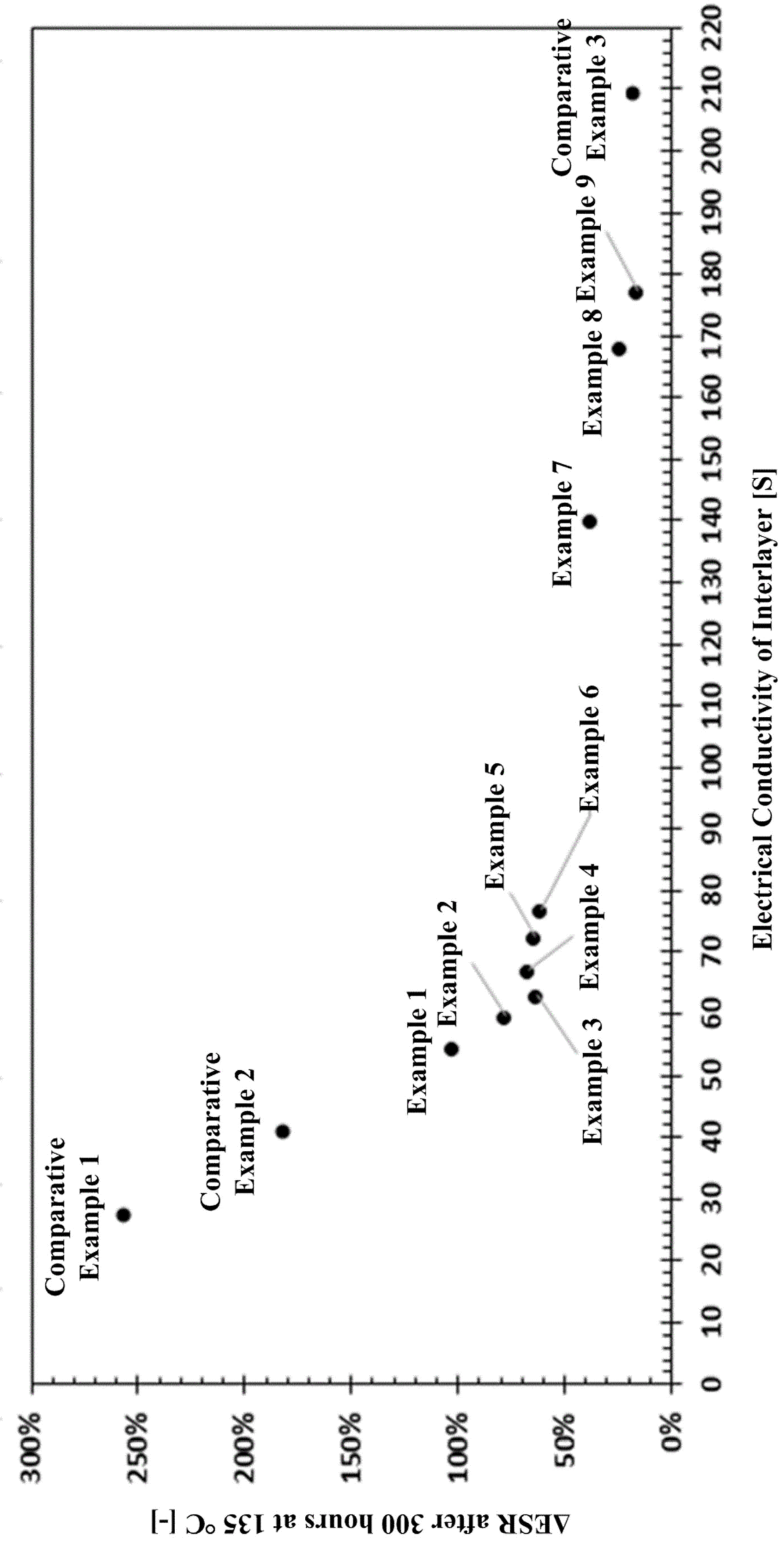
Comparative Example 1
Comparative Example 2
Example 1
Example 2
Example 3
Example 4
Example 5
Example 6
Example 7
Example 8
Example 9
Comparative Example 3
Electrical Conductivity of Interlayer [S]
ΔESR after 300 hours at 135 °C [-]
0
10
20
30
40
50
60
70
80
90
100
110
120
130
140
150
160
170
180
190
200
210
220
0%
50%
100%
150%
200%
250%
300%

*Fig. 1*

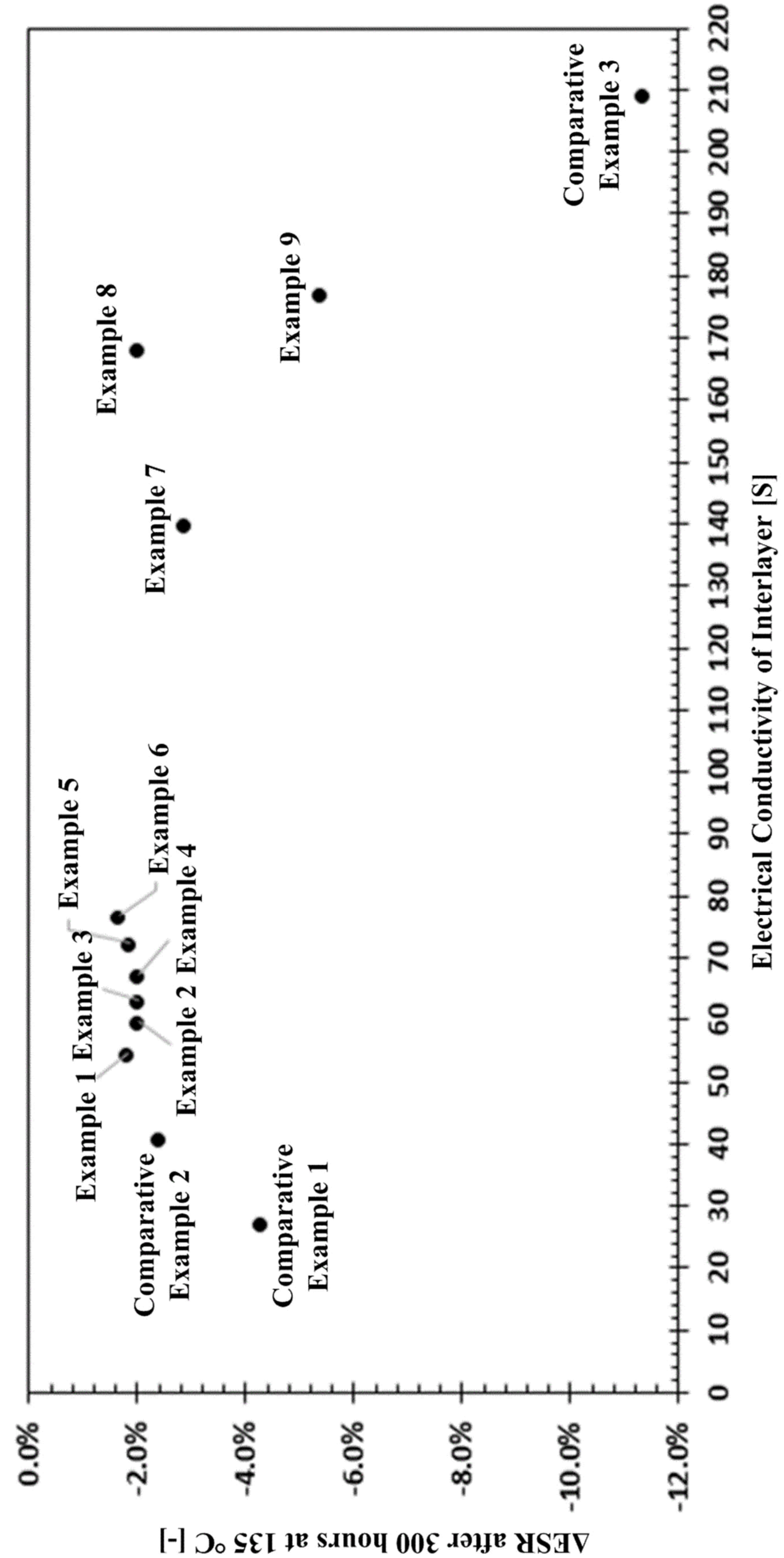
Comparative Example 1
Comparative Example 2
Example 1
Example 2
Example 3
Example 4
Example 5
Example 6
Example 7
Example 8
Example 9
Comparative Example 3
0 10 20 30 40 50 60 70 80 90 100 110 120 130 140 150 160 170 180 190 200 210 220
Electrical Conductivity of Interlayer [S]
0.0%
-2.0%
-4.0%
-6.0%
-8.0%
-10.0%
-12.0%
ΔESR after 300 hours at 135 °C [-]

*Fig. 2*

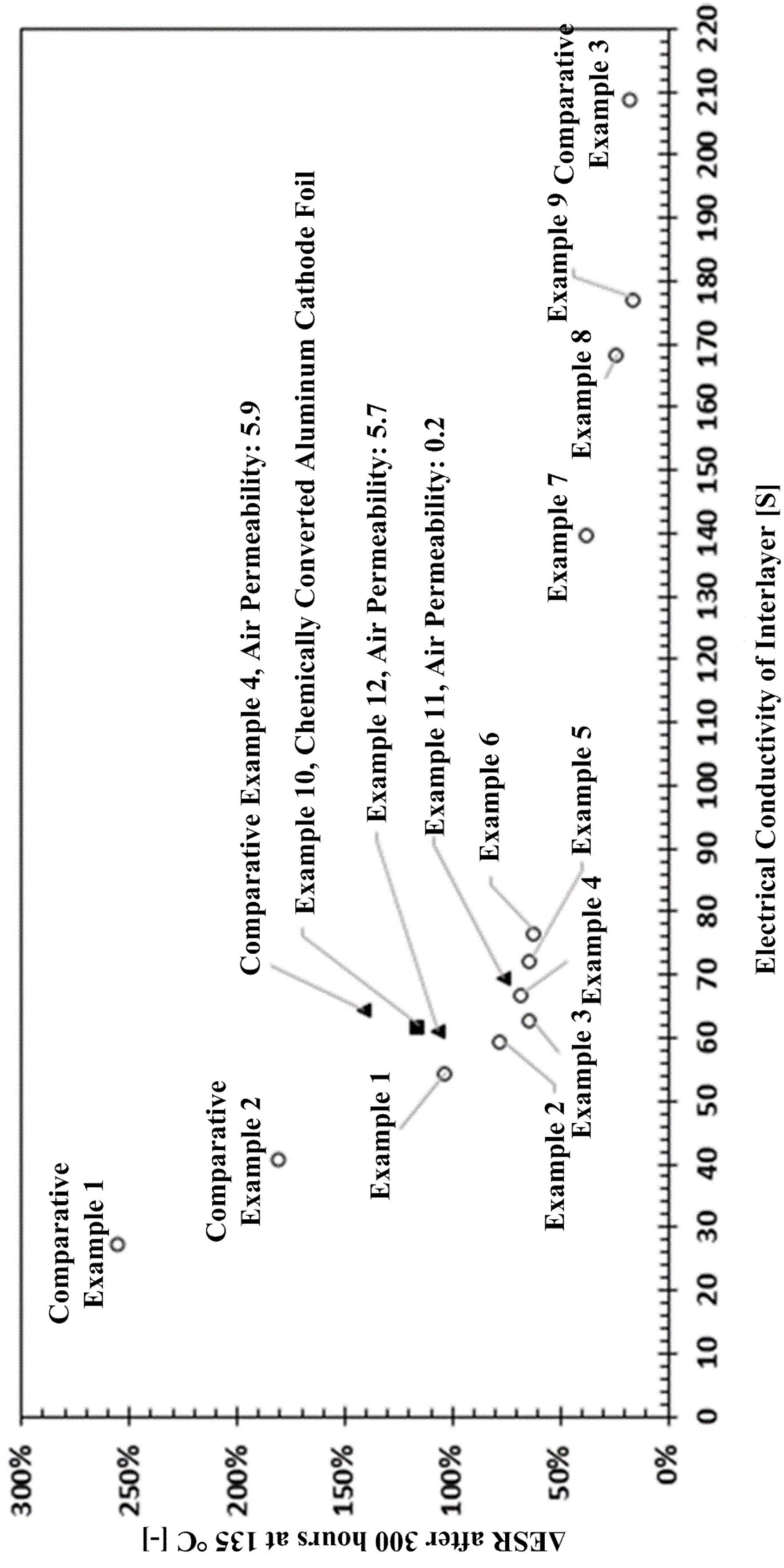
Comparative Example 1
Comparative Example 2
Example 1
Comparative Example 4, Air Permeability: 5.9
Example 10, Chemically Converted Aluminum Cathode Foil
Example 12, Air Permeability: 5.7
Example 11, Air Permeability: 0.2
Example 6
Example 2
Example 3
Example 4
Example 5
Example 7
Example 8
Example 9
Comparative Example 3
ΔESR after 300 hours at 135 °C [-]
300%
250%
200%
150%
100%
50%
0%
0
10
20
30
40
50
60
70
80
90
100
110
120
130
140
150
160
170
180
190
200
210
220
Electrical Conductivity of Interlayer [S]

*Fig. 3*

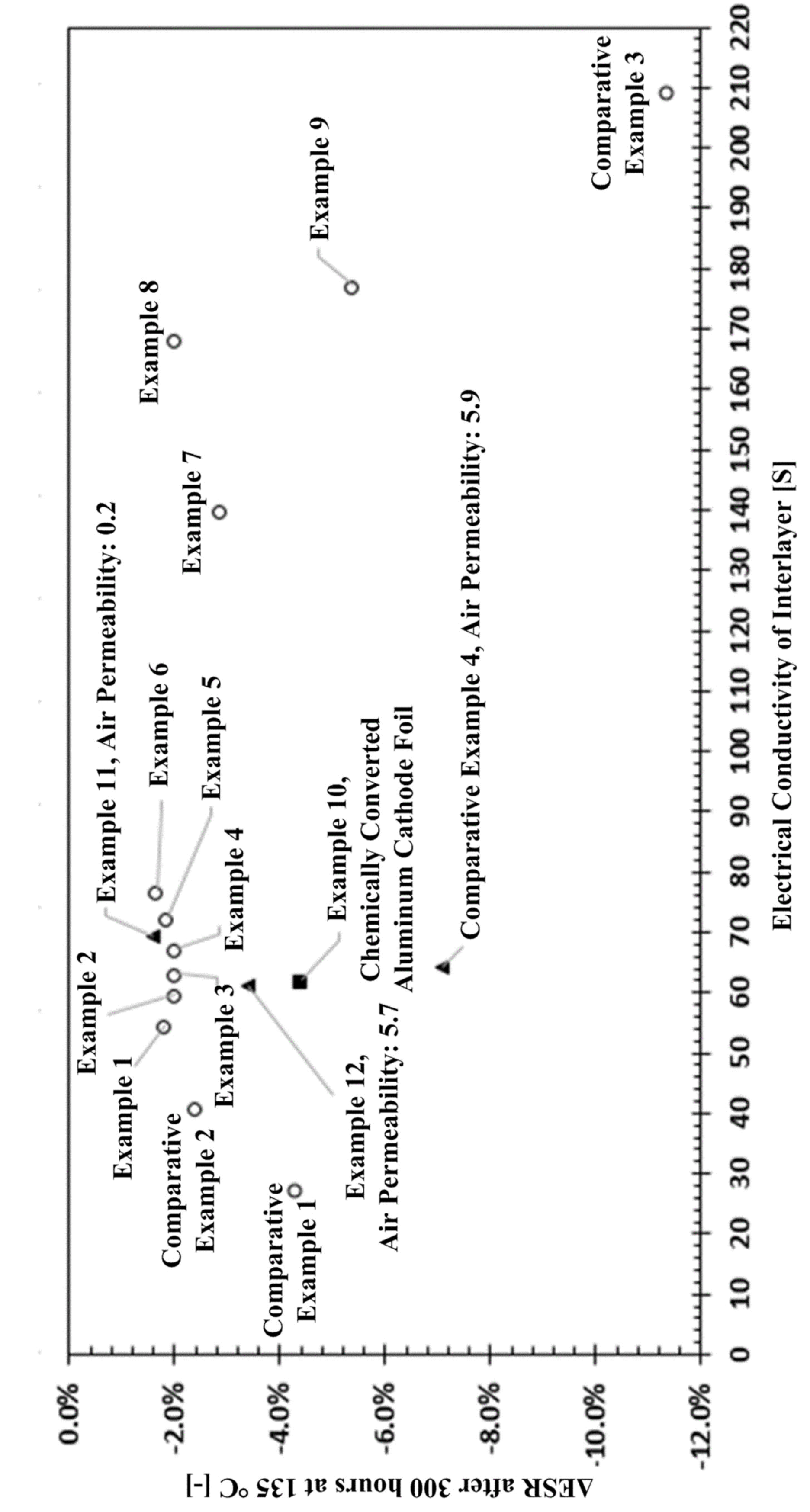
ΔESR after 300 hours at 135 °C [-]
0.0%
-2.0%
-4.0%
-6.0%
-8.0%
-10.0%
-12.0%
Electrical Conductivity of Interlayer [S]
0
10
20
30
40
50
60
70
80
90
100
110
120
130
140
150
160
170
180
190
200
210
220
Comparative Example 1
Comparative Example 2
Example 1
Example 2
Example 3
Example 4
Example 5
Example 6
Example 7
Example 8
Example 9
Example 11, Air Permeability: 0.2
Example 12, Air Permeability: 5.7
Example 10, Chemically Converted Aluminum Cathode Foil
Comparative Example 4, Air Permeability: 5.9
Comparative Example 3

*Fig. 4*

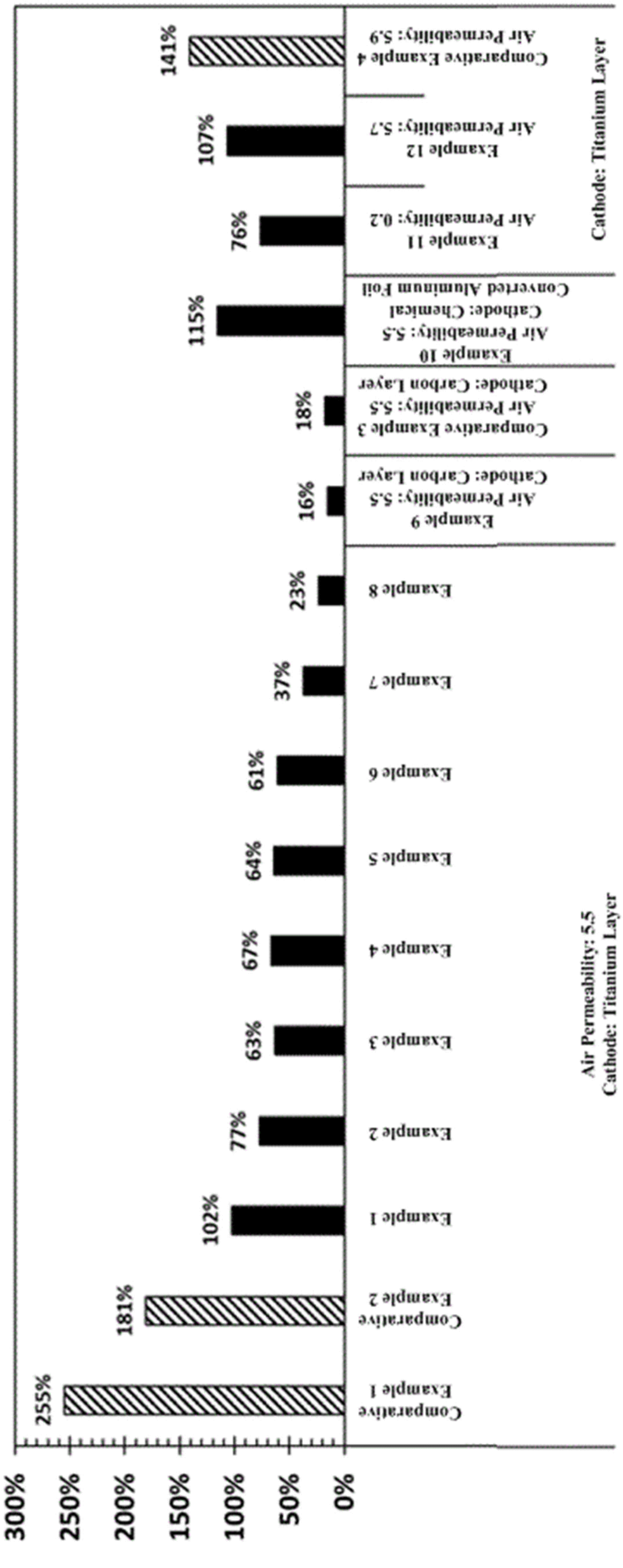
300%
250%
200%
150%
100%
50%
0%
255%
Comparative Example 1
181%
Comparative Example 2
102%
Example 1
77%
Example 2
63%
Example 3
67%
Example 4
64%
Example 5
61%
Example 6
37%
Example 7
23%
Example 8
Air Permeability: 5.5
Cathode: Titanium Layer
16%
Example 9
Air Permeability: 5.5
Cathode: Carbon Layer
18%
Comparative Example 3
Air Permeability: 5.5
Cathode: Carbon Layer
115%
Example 10
Air Permeability: 5.5
Cathode: Chemical
Converted Aluminum Foil
76%
Example 11
Air Permeability: 0.2
107%
Example 12
Air Permeability: 5.7
141%
Comparative Example 4
Air Permeability: 5.9
Cathode: Titanium Layer

*Fig. 5*

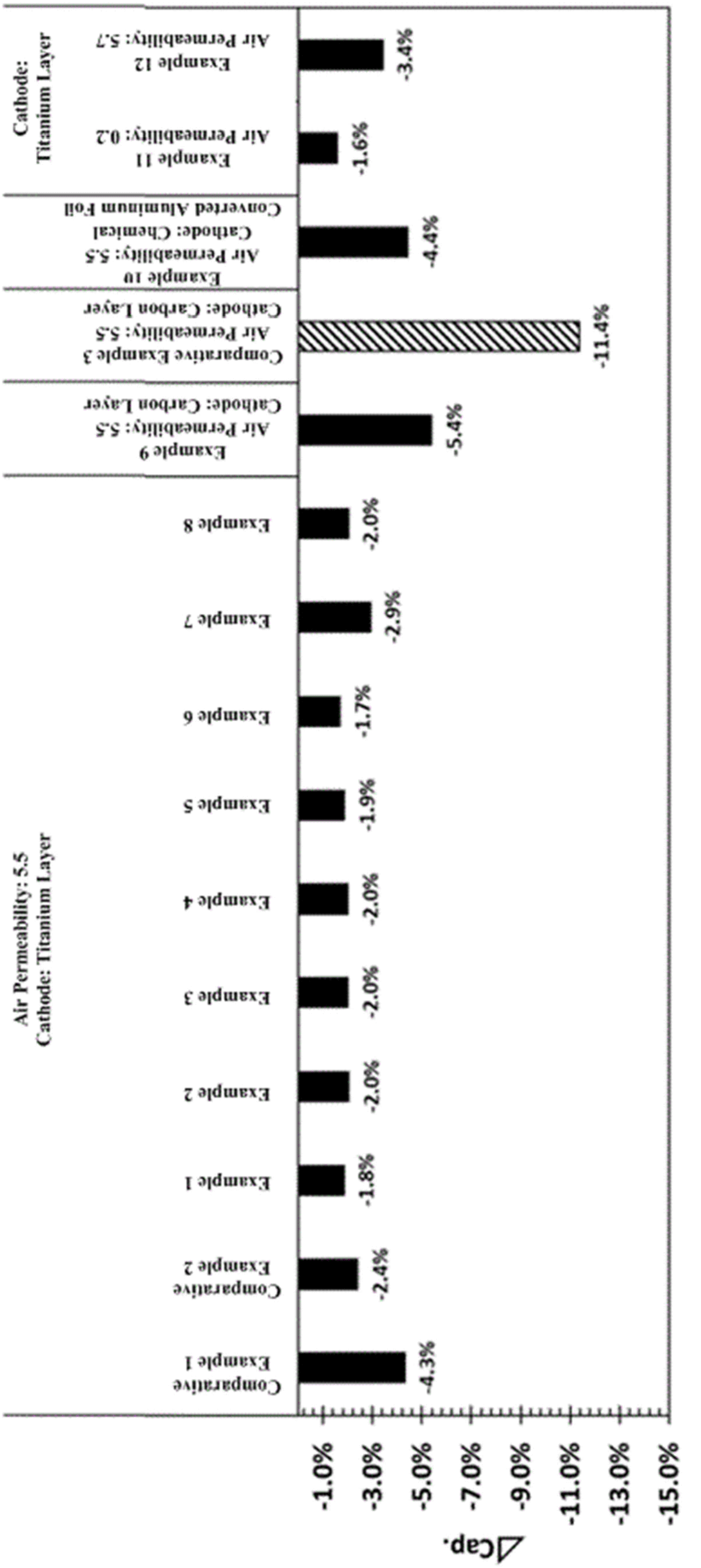

Air Permeability: 5.5
Cathode: Titanium Layer
Comparative Example 1
-4.3%
Comparative Example 2
-2.4%
Example 1
-1.8%
Example 2
-2.0%
Example 3
-2.0%
Example 4
-2.0%
Example 5
-1.9%
Example 6
-1.7%
Example 7
-2.9%
Example 8
-2.0%
Example 9
Air Permeability: 5.5
Cathode: Carbon Layer
-5.4%
Comparative Example 3
Air Permeability: 5.5
Cathode: Carbon Layer
-11.4%
Example 10
Air Permeability: 5.5
Cathode: Chemical Converted Aluminum Foil
-4.4%
Cathode:
Titanium Layer
Example 11
Air Permeability: 0.2
-1.6%
Example 12
Air Permeability: 5.7
-3.4%
-1.0%
-3.0%
-5.0%
-7.0%
-9.0%
-11.0%
-13.0%
-15.0%
△Cap.


*Fig. 6*

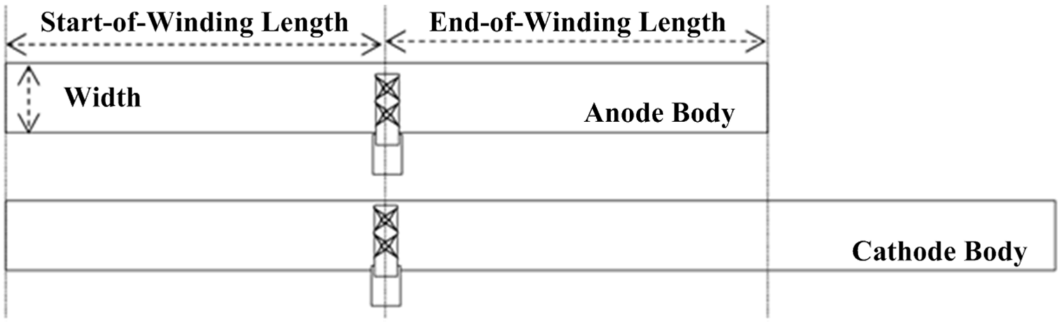
Start-of-Winding Length
End-of-Winding Length
Width
Anode Body
Cathode Body

*Fig. 7*

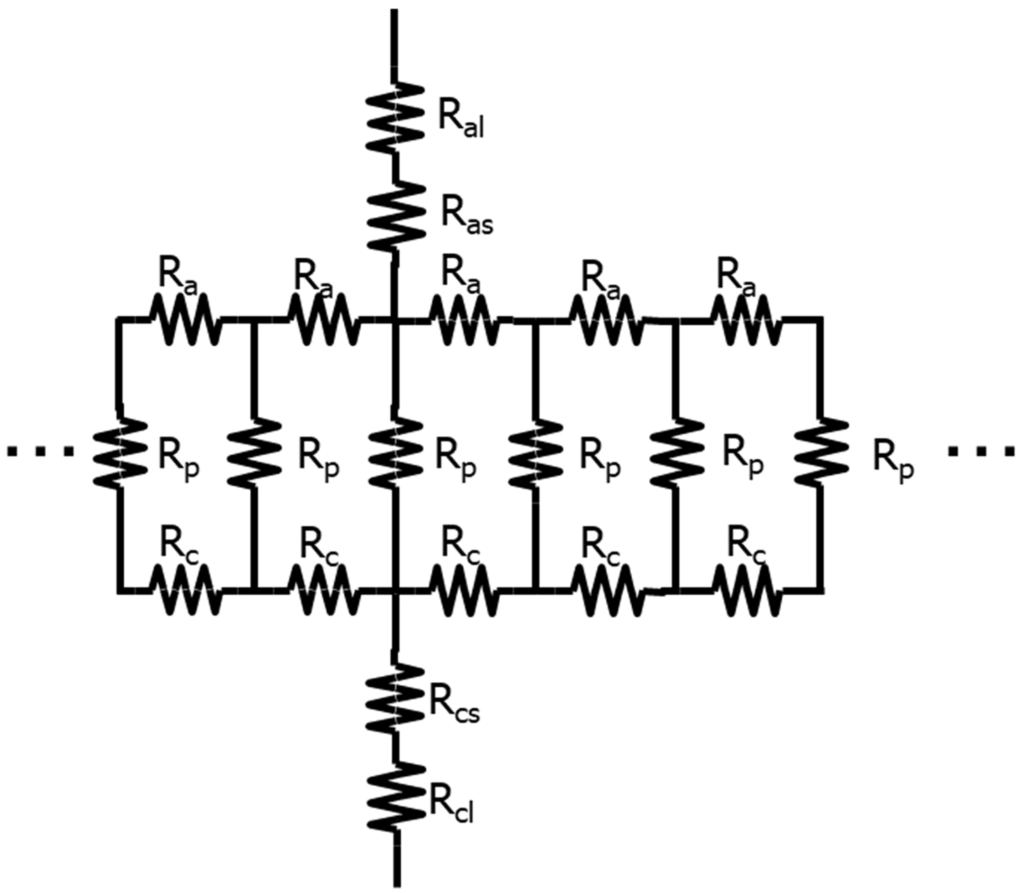


*Fig. 8*

## INTERNATIONAL SEARCH REPORT

International application No.
**PCT/JP2024/033993**

### A. CLASSIFICATION OF SUBJECT MATTER

***H01G 9/02***(2006.01)i; ***H01G 9/00***(2006.01)i; ***H01G 9/15***(2006.01)i; ***H01G 9/145***(2006.01)i
FI: H01G9/02; H01G9/00 290H; H01G9/15; H01G9/145

According to International Patent Classification (IPC) or to both national classification and IPC

### B. FIELDS SEARCHED

Minimum documentation searched (classification system followed by classification symbols)

H01G9/02; H01G9/00; H01G9/15; H01G9/145

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-107682 A (NIPPON KODOSHI CORP.) 09 July 2020 (2020-07-09) paragraphs [0070], [0074]-[0076], tables 2, 4 | 1-13 |
| A | WO 2015/174056 A1 (PANASONIC INTELLECTUAL PROPERTY MANAGEMENT CO., LTD.) 19 November 2015 (2015-11-19) paragraphs [0062]-[0063], examples 8-9, table 2 | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/033993**

| Patent document cited in search report | Publication date (day/month/year) | Patent family member(s) | Publication date (day/month/year) |
|---|---|---|---|
| JP 2020-107682 A | 09 July 2020 | US 2022/0059291 A1<br>paragraphs [0094], [0100]-[0104], tables 2, 4<br>WO 2020/137674 A1<br>EP 3905290 A1<br>CN 113228212 A<br>KR 10-2021-0102279 A<br>TW 202032595 A<br>BR 112021012568 A | |
| WO 2015/174056 A1 | 19 November 2015 | US 2017/0053745 A1<br>paragraphs [0090]-[0091], examples 8-9, table 2<br>CN 106463263 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011060980 A
- JP 2015228424 A
- JP 2010245150 A
- JP 2013026536 A